# FASCICULE DE BREVET EUROPEEN

(11) **EP 3 049 659 B1**
(45) Date de publication et mention de la délivrance du brevet: **02.08.2017**
(21) Numéro de dépôt: 14784306.4
(22) Date de dépôt: 16.09.2014
(51) Int. Cl.: F02C 7/266, F02P 15/00

(54) **DISPOSITIF D'ALLUMAGE D'UN MOTEUR D'AERONEF**
ZÜNDVORRICHTUNG FÜR EIN FLUGZEUGTRIEBWERK
IGNITION DEVICE FOR AN AIRCRAFT ENGINE

(30) Priorité: 26.09.2013 FR 1359261
(43) Date de publication de la demande: 03.08.2016
(73) Titulaire: Safran Helicopter Engines, 64510 Bordes (FR)
(72) Inventeur: BOURGEOIS, Nicolas, F-64140 Lons (FR); GRENIER, Benoît, F-64160 Saint Castin (FR); GUICHEMERRE, Nicolas, F-64000 Pau (FR)
(74) Mandataire: Gevers & Orès
(86) Numéro de dépôt international: PCT/FR2014/052308
(87) Numéro de publication internationale: WO 2015/044557

(56) Documents cités:
- EP-A1- 0 634 572
- EP-A2- 2 375 031
- FR-A1- 2 958 683
- US-A- 2 716 720
- US-B2- 7 509 812

## Description

La présente invention concerne un dispositif d'allumage de moteur, notamment destiné à l'alimentation des bougies. Le dispositif vise en particulier les générateurs haute énergie pour turbine à gaz d'aéronef.

Lors d'un démarrage de moteurs, les bougies sont alimentées en électricité à partir d'une source d'énergie électrique pour produire une étincelle enflammant un mélange d'air et de carburant dans le moteur. L'étincelle est obtenue à partir d'un condensateur produisant une décharge électrique de tension élevée entre les électrodes. Généralement, toutes les bougies sont alimentées par la même source d'énergie, la source d'énergie étant capable de fournir suffisamment d'énergie pour allumer plusieurs bougies simultanément. Pour une alimentation indépendante de chaque bougie, elles sont reliées à la source d'énergie par une voie d'alimentation indépendante de celle des autres.

Le dispositif d'allumage peut en outre être contrôlé par un système de commande, qui lui envoie des ordres d'allumage d'une ou de plusieurs bougies par un signal circulant dans une liaison électrique. En aéronautique, les générateurs haute énergie sont par exemple contrôlés par des systèmes de commande électroniques de type FADEC (pour « Full Authority Digital Engine Control » en anglais). Un FADEC est un calculateur à plusieurs canaux, qui reçoit un nombre limité d'informations de capteurs, de contrôleurs, de dispositifs de vol, et du pilote. Il analyse ces données et envoie en retour des ordres de commande aux dispositifs de vol, conformes à des procédés enregistrés dans le FADEC.

Afin d'économiser et d'éviter l'usure des bougies, il est avantageux d'utiliser une seule bougie au démarrage, en alternant leur utilisation à chaque démarrage.

Le brevet US 7 509 812 décrit par exemple un dispositif comprenant un générateur et un système de commande, capable de gérer l'allumage de deux bougies d'un même moteur. Il décrit notamment un procédé permettant d'allumer un moteur avec une première bougie, puis d'utiliser une deuxième bougie pour accélérer le moteur jusqu'à une vitesse de rotation suffisante pour maintenir le moteur allumé de façon autonome. Un cas particulier du procédé lié à une panne, permet d'utiliser la seconde bougie pour allumer le moteur dans le cas où la première ne fonctionnerait pas.

Dans le brevet US 6 195 247, l'invention se rapporte à un circuit d'allumage à deux bougies avec un système de commande ayant deux canaux connectés au circuit d'allumage par deux liaisons doublées. Chaque canal est ainsi capable de gérer l'allumage des deux bougies pour assurer le démarrage contre le risque de défaillance de l'autre canal.

Cependant, ces dispositifs utilisent le système de commande pour gérer directement l'alternance de l'alimentation des bougies. Ils ont notamment besoin d'utiliser un canal du système de commande pour chacune des voies d'alimentation des bougies, ce qui est pénalisant pour le système de commande qui est amené à gérer d'autres dispositifs de vol.

L'objet de l'invention est de remédier à cet inconvénient et de proposer un dispositif d'allumage permettant de n'utiliser qu'un seul canal du système de commande.

Pour cela, le dispositif d'allumage d'un moteur d'aéronef comprenant au moins deux bougies, comporte une alimentation, une première voie pour alimenter une première bougie et une deuxième voie pour alimenter une deuxième bougie, les dites voies étant reliées à l'alimentation par des moyens de distribution de l'alimentation.

Le dispositif est remarquable en ce que lesdits moyens de distribution comportent un premier circuit configuré pour alimenter alternativement ladite première voie ou ladite deuxième voie, et un deuxième circuit pour alimenter simultanément lesdites première et deuxième voies, le dispositif étant configuré pour utiliser soit le premier circuit soit le deuxième circuit lors d'un démarrage.

Ainsi, le dispositif possède des moyens de distribution propres qui lui permettent de démarrer le moteur avec une seule bougie grâce au premier circuit, ou bien avec les deux bougies simultanément grâce au deuxième circuit. Le système de commande ne gère pas directement chaque voie d'allumage des bougies.

Selon différents modes de réalisation de l'invention, qui pourront être pris ensembles ou séparément :
- les moyens de distribution comprennent un premier relais monostable configuré pour connecter soit le premier circuit, soit le deuxième circuit à l'alimentation,
- le premier relais monostable est un relais temporisé,
- les moyens de distribution comprennent un deuxième relais bistable à deux bobines configuré pour connecter le premier circuit alternativement à la première voie ou à la deuxième voie,
- les moyens de distribution comprennent un troisième relais bistable configuré pour alterner la connexion des deux bobines du deuxième relais bistable à l'alimentation,
- un système de commande apte à ordonner le démarrage du moteur par le premier circuit avec une liaison électrique unique connectée auxdits moyens de distribution par une entrée LP,
- l'entrée LP est configurée pour actionner le premier relais monostable et le troisième relais bistable simultanément,
- le système de commande est de type FADEC,
- la commande du système de commande s'effectue par un signal basse tension,
- les bougies sont des bougies à semi-conducteur,
- le dispositif d'allumage est un générateur haute énergie,
- les moyens de distribution et les premières et deuxièmes voies sont intégrés dans un boîtier haute énergie.

L'invention se rapporte encore à un aéronef comportant un tel dispositif d'allumage d'un moteur.

Les figures du dessin annexé feront bien comprendre comment l'invention peut être réalisée. Sur ces figures, des références identiques désignent des éléments semblables.
La figure 1 illustre schématiquement un dispositif d'allumage selon un mode de réalisation particulier de l'invention.
La figure 2 est un schéma synoptique d'un procédé selon un mode de réalisation particulier de l'invention.

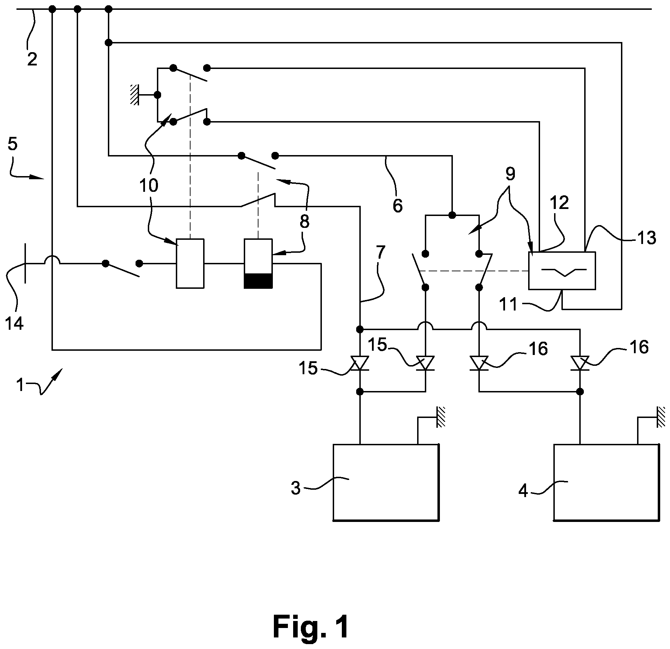

Sur la figure 1, le dispositif d'allumage 1 représenté est un générateur haute énergie d'un moteur d'aéronef. Le générateur comprend une alimentation (non représentée sur la figure 1), par exemple une batterie qui fournit une tension de 28V sur une phase 2 de l'alimentation, ainsi qu'une première voie 3 pour alimenter une première bougie et une deuxième voie 4 pour alimenter une deuxième bougie (les bougies ne sont pas représentées sur la figure 1). Les bougies peuvent être des bougies classiques avec de l'air entre les électrodes, ou bien des bougies à semi-conducteur. Les bougies classiques nécessitent une tension de décharge de l'ordre de 20 kV, alors que les bougies à semi-conducteur nécessitent une tension de l'ordre de 3 kV.

Les première et deuxième voies 3, 4 sont reliées à l'alimentation par des moyens de distribution 5 de l'alimentation comportant un premier 6 et un deuxième 7 circuit. Les moyens de distribution 5, ainsi que les premières 3 et deuxièmes 4 voies sont, de préférence, intégrés dans un boîtier haute énergie du générateur haute énergie.

Afin de n'utiliser qu'une seule bougie au démarrage, le premier circuit 6 est configuré pour alimenter la première voie 3 ou la deuxième voie 4. En outre, lesdites première et deuxième voies 3, 4 sont alternativement alimentées pour que les bougies soient utilisées de manière égale au cours du temps. En revanche, le deuxième circuit 7 est configuré pour alimenter simultanément les deux bougies par les première et deuxième voies 3, 4.

Le dispositif 1 est configuré pour utiliser soit le premier circuit 6 soit le deuxième circuit 7 lors d'un démarrage. Ainsi, lors d'un démarrage normal, le premier circuit 6 est alimenté pour n'utiliser qu'une seule bougie. Il existe d'autres situations, par exemple lors de températures très basses, au cours desquelles, les deux bougies sont nécessaires pour assurer le démarrage du moteur. Dans ce cas, le dispositif 1 utilise le deuxième circuit 7 pour alimenter les deux bougies simultanément, et d'obtenir ainsi le démarrage du moteur plus aisément.

A cette fin, les moyens de distribution 5 comprennent des relais électriques 8, 9, 10 agencés sur les premier 6 et deuxième 7 circuits, de sorte qu'ils dirigent le courant fourni par l'alimentation vers le circuit choisi. Les relais électriques 8, 9, 10 sont des composants qui permettent la commutation de liaisons électriques. Il existe, par exemple, des relais électromécaniques, comprenant une bobine, qui, lorsqu'elle est actionnée, déplace un élément mécanique, tel un contact ou un interrupteur, entre deux positions.

Un premier relais monostable 8 connecte l'alimentation, soit au premier circuit 6, soit au deuxième circuit 7. Un relais monostable 8 déplace le contact entre une première position lorsque la bobine n'est pas alimentée et une deuxième position, en cas d'alimentation de celle-ci. Le contact dans la deuxième position, se produit uniquement si la bobine est alimentée. Dès qu'elle n'est plus alimentée, le contact revient dans la première position. Le premier relais 8 est disposé pour être actionné au début des deux circuits d'alimentation 6, 7.

Ainsi, lorsque le premier relais 8 est actionné, l'alimentation des bougies se produit sur une seule bougie, dans un mode alternatif. Et lorsque le premier relais 8 n'est plus actionné, l'alimentation des deux bougies se produit simultanément.

Avantageusement, le premier relais monostable 8 est un relais temporisé, pour laisser le temps au premier circuit 6 de se connecter à la voie 3, 4 de la bougie à alimenter, et éviter ainsi le risque d'alimenter l'autre bougie par erreur.

Les moyens de distribution 5 comprennent un deuxième relais bistable 9 à deux bobines configuré pour connecter le premier circuit 6 alternativement à la première voie 3 ou à la deuxième voie 4. Un relais bistable comprend les mêmes éléments qu'un relais monostable, excepté qu'il garde la position lorsque la bobine n'est plus alimentée. Pour un relais bistable à deux bobines, une première bobine met le contact dans la première position lorsqu'elle est alimentée, et la deuxième bobine met le contact dans la deuxième position, lorsqu'elle est alimentée. Pour mettre le contact dans la position souhaitée, il est nécessaire d'alimenter la bobine correspondante.

Sur la figure 1, le deuxième relais bistable 9 à deux bobines a trois connexions 11, 12, 13, une première connexion 11 est reliée d'une part à la phase 2 de l'alimentation, et d'autre part aux deux bobines. Les deux autres connexions 12, 13, relient chacune une des bobines à la masse.

Les moyens de distribution comprennent un troisième relais bistable 10 alternant la connexion des deux bobines du deuxième relais bistable 9 à la phase 2 de l'alimentation. Pour cela, le troisième relais bistable 10 a une première position qui relie la première bobine du deuxième relais bistable 9 à la masse, et une deuxième position qui relie la deuxième bobine du deuxième relais bistable à la masse. Pour les deux positions, seule une bobine est alimentée, l'autre bobine n'étant pas connectée à la phase 2 de l'alimentation. Dans le cas d'une alimentation d'une seule bougie, le troisième relais bistable 10 sert à effectuer automatiquement le changement de contact du deuxième relais bistable 9, et agit par conséquent sur le changement de la voie 3, 4 à alimenter.

Le dispositif 1 d'allumage comprend aussi un système de commande (non représentée sur la figure 1), de type FADEC, qui est configuré pour commander le démarrage du moteur dans un mode alterné par le premier circuit 6. Le système de commande est connecté auxdits moyens de distribution 5 par une liaison électrique unique, via une entrée de type LP 14 (pour « Low Power » en anglais), destinée à transporter un signal basse tension. Ainsi, seul un canal du système de commande est utilisé pour relier le système de commande au générateur haute énergie.

L'entrée LP 14 permet d'actionner le premier relais monostable 8 et le troisième relais bistable 10 de façon sensiblement simultanée. Lorsque l'entrée LP 14 reçoit un signal, le premier 8 et le troisième 10 relais sont actionnés. Le premier relais monostable 8 connecte le premier circuit 6 à la phase 2 de l'alimentation pour un démarrage avec une bougie unique, et le troisième relais bistable 10 change la bobine du deuxième relais bistable 9, qui est connectée à l'alimentation, via les connexions 11, 12, 13. Ainsi, ce changement d'alimentation de bobine, engendre la modification du contact du deuxième relais bistable 9, et par conséquent alterne la voie d'alimentation 3, 4 des bougies.

Dès qu'un signal est transmis à l'entrée LP 14, le premier circuit 6 est sélectionné, et la bougie qui sert au démarrage est automatiquement alternée. En revanche, si aucun signal n'est envoyé à l'entrée LP 14, c'est le deuxième circuit 7 alimentant les deux bobines simultanément, qui sert à l'allumage des bougies.

Les circuits 6, 7 comportent en outre des diodes 15, 16 qui empêchent le courant circulant dans l'un des circuits 6, 7, de passer dans l'autre circuit en sens inverse. Les premier et deuxième circuits 6, 7, sont reliés au niveau des deux voies d'alimentation 3, 4 des bougies.

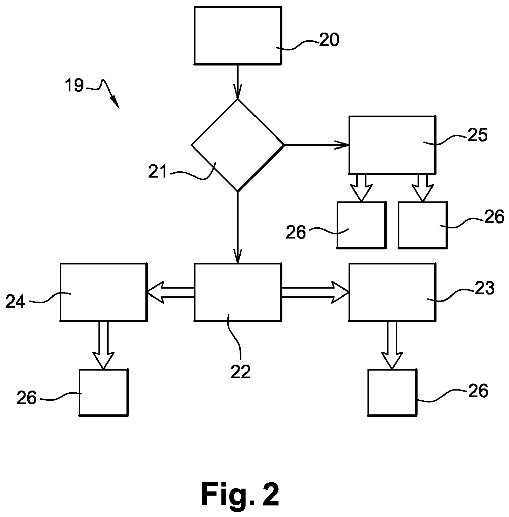

Le procédé 19, représenté sur la figure 2 et lié à l'utilisation du dispositif d'allumage 1 pour un moteur comprenant deux bougies, comprend les étapes suivantes :
a) commander le démarrage du moteur 20,
b) vérifier qu'un mode de pilotage alterné est demandé 21,
c) si la condition b) est vérifiée, sélectionner une première bougie 22, sélectionner la bougie, qui n'a pas été utilisée lors du précédent démarrage alterné,
d) basculer la connexion de l'alimentation sur la voie de la bougie choisie à l'étape c) 23, 24,
e) si la condition b) n'est pas vérifiée, basculer la connexion de l'alimentation sur les voies des deux bougies 25,
f) alimenter la ou les bougies connectées à l'alimentation 26.

Ce procédé 19 permet ainsi de passer automatiquement d'un mode de démarrage alterné des bougies d'un moteur à un mode de démarrage simultané des bougies, et réciproquement. Il suffit en outre d'avoir une seule information sur la commande d'un des modes, ici le mode simultané, pour définir le mode de démarrage du moteur.

## Revendications

1. Dispositif d'allumage d'un moteur d'aéronef comprenant au moins deux bougies, le dispositif comportant une alimentation, une première voie (3) pour alimenter une première bougie et une deuxième voie (4) pour alimenter une deuxième bougie, les dites voies (3, 4) étant reliées à l'alimentation par des moyens de distribution (5) de l'alimentation, **caractérisé en ce que** lesdits moyens de distribution (5) comportent un premier circuit (6) configuré pour alimenter alternativement ladite première voie (3) ou ladite deuxième voie (4), et un deuxième circuit (7) pour alimenter simultanément lesdites première (3) et deuxième voies (4), le dispositif étant configuré pour utiliser soit le premier circuit (6), soit le deuxième circuit (7) lors d'un démarrage.

2. Dispositif d'allumage d'un moteur d'aéronef selon la revendication 1, dans lequel les moyens de distribution (5) comprennent un premier relais monostable (8) configuré pour connecter soit le premier circuit (6), soit le deuxième circuit (7) à l'alimentation.

3. Dispositif d'allumage d'un moteur d'aéronef selon la revendication 2, dans lequel le premier relais monostable (8) est un relais temporisé.

4. Dispositif d'allumage d'un moteur d'aéronef l'une quelconque des revendications précédentes, dans lequel les moyens de distribution (5) comprennent un deuxième relais bistable (9) à deux bobines configuré pour connecter le premier circuit (6) alternativement à la première voie (3) ou à la deuxième voie (4).

5. Dispositif d'allumage d'un moteur d'aéronef selon la revendication 4, dans lequel les moyens de distribution (5) comprennent un troisième relais bistable (10) configuré pour alterner la connexion des deux bobines du deuxième relais bistable (9) à l'alimentation.

6. Dispositif d'allumage d'un moteur d'aéronef selon la revendication 5, comprenant un système de commande apte à ordonner le démarrage du moteur par le premier circuit (6) avec une liaison électrique unique connectée auxdits moyens de distribution (5) par une entrée (14) destinée à transporter un signal basse tension.

7. Dispositif d'allumage d'un moteur d'aéronef selon la revendication 6, dans lequel l'entrée (14) est configurée pour actionner le premier relais monostable (8) et le troisième relais bistable (10) simultanément.

8. Dispositif d'allumage d'un moteur d'aéronef selon la revendication 7, dans lequel le système de commande est un calculateur à plusieurs canaux.

9. Dispositif d'allumage d'un moteur d'aéronef selon l'une quelconque des revendications précédentes, dans lequel les bougies sont des bougies à semi-conducteur.

10. Dispositif d'allumage d'un moteur d'aéronef selon l'une quelconque des revendications précédentes, dans lequel le dispositif d'allumage est un générateur haute énergie.

11. Dispositif d'allumage d'un moteur d'aéronef selon la revendication 10, dans lequel les moyens de distribution (5) et les premières et deuxièmes voies (3, 4) sont intégrés dans un boîtier haute énergie.

12. Aéronef comprenant un dispositif d'allumage (1) d'un moteur d'aéronef selon l'une quelconque des revendications 1 à 11.

## Patentansprüche

1. Zündvorrichtung für einen Flugzeugmotor, die zumindest zwei Zündkerzen aufweist, wobei die Vorrichtung eine Versorgung, einen ersten Weg (3), um eine erste Zündkerze zu versorgen, und einen zweiten Weg (4), um eine zweite Zündkerze zu versorgen, aufweist, wobei die Wege (3, 4) mit der Versorgung über Mittel zur Verteilung (5) der Versorgung verbunden sind, **dadurch gekennzeichnet, dass** die Mittel zur Verteilung (5) eine erste Schaltung (6), die konfiguriert ist, um abwechselnd den ersten Weg (3) oder den zweiten Weg (4) zu versorgen, und eine zweite Schaltung (7), um gleichzeitig den ersten (3) und den zweiten Weg (4) zu versorgen, umfasst, wobei die Vorrichtung konfiguriert ist, entweder die erste Schaltung (6) oder die zweite Schaltung (7) bei einem Start zu verwenden.

2. Zündvorrichtung für einen Flugzeugmotor nach Anspruch 1, wobei die Mittel zur Verteilung (5) ein erstes monostabiles Relais (8) umfassen, das konfiguriert ist, entweder die erste Schaltung (6) oder die zweite Schaltung (7) mit der Versorgung zu verbinden.

3. Zündvorrichtung für einen Flugzeugmotor nach Anspruch 2, wobei das erste monostabile Relais (8) ein Zeitrelais ist.

4. Zündvorrichtung für einen Flugzeugmotor nach einem der vorhergehenden Ansprüche, wobei die Mittel zur Verteilung (5) ein zweites bistabiles Relais (9) mit zwei Spulen umfassen, das konfiguriert ist, um die erste Schaltung (6) abwechselnd mit dem ersten Weg (3) oder dem zweiten Weg (4) zu verbinden.

5. Zündvorrichtung für einen Flugzeugmotor nach Anspruch 4, wobei die Mittel zur Verteilung (5) ein drittes bistabiles Relais (10) umfassen, das konfiguriert ist, die Verbindung der beiden Spulen des zweiten bistabilen Relais (9) mit der Versorgung zu wechselnz.

6. Zündvorrichtung für einen Flugzeugmotor nach Anspruch 5, die ein Steuersystem umfasst, das fähig ist, das Starten des Motors durch die erste Schaltung (6) mit einer einzigen elektrischen Verbindung zu veranlassen, die mit den Mitteln zur Verteilung (5) durch einen Einlass (14) verbunden ist, der dazu bestimmt ist, ein Niederspannungssignal zu transportieren.

7. Zündvorrichtung für einen Flugzeugmotor nach Anspruch 6, wobei der Einlass (14) konfiguriert ist, das erste monostabile Relais (8) und das dritte bistabile Relais (10) gleichzeitig zu betätigen.

8. Zündvorrichtung für einen Flugzeugmotor nach Anspruch 7, wobei das Steuersystem ein Kalkulator mit mehreren Kanälen ist.

9. Zündvorrichtung für einen Flugzeugmotor nach einem der vorhergehenden Ansprüche, wobei die Zündkerzen Halbleiter-Zündkerzen sind.

10. Zündvorrichtung für einen Flugzeugmotor nach einem der vorhergehenden Ansprüche, wobei die Zündvorrichtung ein Hochenergiegenerator ist.

11. Zündvorrichtung für einen Flugzeugmotor nach Anspruch 10, wobei die Mittel zur Verteilung (5) und die ersten und zweiten Wege (3, 4) in einem Hochenergiegehäuse integriert sind.

12. Flugzeug, das eine Zündvorrichtung (1) für einen Flugzeugmotor nach einem der Ansprüche 1 bis 11 umfasst.

## Claims

1. Device for igniting an aircraft engine, comprising at least two spark plugs, the device comprising a power supply, a first path (3) for supplying power to a first spark plug and a second path (4) for supplying power to a second spark plug, said paths (3, 4) being connected to the power supply by distribution means (5) of the power supply, **characterised in that** said distribution means (5) comprise a first circuit (6) that is configured to alternately supply power to said first path (3) or said second path (4), and a second circuit (7) for simultaneously supplying power to said first (3) and second (4) paths, the device being configured to use either the first circuit (6) or the second circuit (7) during start-up.

2. Device for igniting an aircraft engine according to claim 1, wherein the distribution means (5) comprise a first, monostable relay (8) that is configured to connect either the first circuit (6) or the second circuit (7) to the power supply.

3. Device for igniting an aircraft engine according to claim 2, wherein the first, monostable relay (8) is a time-delayed relay.

4. Device for igniting an aircraft engine according to any of the preceding claims, wherein the distribution means (5) comprise a second, two-coil bistable relay (9) that is configured to alternately connect the first circuit (6) to the first path (3) or to the second path (4).

5. Device for igniting an aircraft engine according to claim 4, wherein the distribution means (5) comprise a third, bistable relay (10) that is configured to alternate the connection of the two coils of the second, bistable relay (9) to the power supply.

6. Device for igniting an aircraft engine according to claim 5, comprising a control system that is capable of organising the start-up of the engine by means of the first circuit (6) using a single electrical connection that is connected to said distribution means (5) by an input (14) for transmitting a low-voltage signal.

7. Device for igniting an aircraft engine according to claim 6, wherein the input (14) is configured to actuate the first, monostable relay (8) and the third, bistable relay (10) simultaneously.

8. Device for igniting an aircraft engine according to claim 7, wherein the control system is a multiple-channel computer.

9. Device for igniting an aircraft engine according to any of the preceding claims, wherein the spark plugs are semi-conductor spark plugs.

10. Device for igniting an aircraft engine according to any of the preceding claims, wherein the ignition device is a high-power generator.

11. Device for igniting an aircraft engine according to claim 10, wherein the distribution means (5) and the first and second paths (3, 4) are integrated in a high-power housing.

12. Aircraft comprising a device (1) for igniting an aircraft engine according to any of claims 1 to 11.
